# EUROPÄISCHE PATENTANMELDUNG

(11) **EP 0 531 564 A1**
(43) Veröffentlichungstag der Anmeldung: **17.03.1993**
(21) Anmeldenummer: 91115346.8
(22) Anmeldetag: 11.09.1991
(51) Int. Cl.: H02K 23/54, H02K 13/08

(54) **Rotor für elektrische Maschinen**

(71) Anmelder: PERM MOTOR COMPANY AG, CH-6301 Zug (CH)
(72) Erfinder: Andres, Claude, F-68320 Muntzenheim (FR); Sigrist, Jean-Philippe, F-68920 Wintzenheim (FR)
(74) Vertreter: Ratzel, Gerhard, Dr.

(57) **Zusammenfassung**

Es wird ein Rotor (1) für elektrische Maschinen vorgeschlagen mit einem Kommutator und einer stromführenden Wicklung. Diese Wicklung ist durch eine Vielzahl von am Umfang verteilten Wicklungsteilstücken (3) gebildet, wobei die Wicklungsteilstücke (3) in wenigstens einer Ebene rechtwinklig zu der Rotorachse (1a) angeordnet sind und sich von einem axial innenliegenden Bereich zu einem radial außenliegenden Bereich erstrecken, so daß beide Enden der Wicklungsteilstücke (3) im radial außenliegenden Bereich angeordnet sind. Nur über diese Enden sind leitende Verbindungen (4) der einzelnen Wicklungsteilstücke (3) untereinander gebildet. Der Kommutator (2) ist zumindest teilweise durch die Oberflächen der Wicklungsteilstücke (3) am radial außenliegenden Bereich gebildet.

## Beschreibung

Die Erfindung geht aus, von einem Rotor für eine elektrische Maschine mit einem Kommutator und einer stromführenden Wicklung, nach der Gattung des Hauptanspruchs.

In dem europäischen Patent 0 230 759 wird ein Rotor für eine elektrische Maschine beschrieben mit einer stromführenden Wicklung, die durch eine Vielzahl von am Umfang verteilten Wicklungsteilstücken gebildet wird. Diese Wicklungsteilstücke sind in wenigstens einer Ebene rechtwinklig zu der Rotorachse angeordnet und erstrecken sich von einem axial innenliegenden Bereich zu einem radial außenliegenden Bereich des Rotors. Beide Enden der einzelnen Wicklungsteilstücke befinden sich im radial außenliegenden Bereich. Nur über diese Enden werden leitende Verbindungen der einzelnen Wicklungsteilstücke untereinander gebildet. Der Kommutator dieser Ausführungsform eines Rotors wird durch die axial innenliegenden Oberflächen der Wicklungsteilstücke gebildet, die zumindest in diesem Bereich als Bandleitungen bzw. Metallstreifen ausgebildet sind.

Die Verwendung des axial innenliegenden Bereichs der Wicklung des Rotors als Kommutator schließt die Anordnung von Kraftübertragungsmitteln in diesem für die Kraftübertragung besonders günstigen Bereich aus. Da die Bürsten die Rotorwicklung in einer Ebene senkrecht zur Rotorachse kontaktieren, ist nur eine einseitige Lagerung bzw. Kraftübertragung des Rotors möglich.
Außerdem steht den Bürsten zur Kontaktierung der Rotorwicklung im axial innenliegenden Bereich des Rotors nur eine relativ geringe Oberfläche zur Verfügung. Diese begrenzt die Leistungsfähigkeit des Motors entscheidend.

Der Erfindung liegt die Aufgabe zugrunde, einen Rotor mit guten Kraftübertragungseigenschaften zu schaffen.

Bei dem erfindungsgemäßen Rotor ist der Kommutator zumindest teilweise durch die Oberflächen der Wicklungsteilstücke am radial außenliegenden Bereich gebildet.

Mit dieser Anordnung des Kommutators kann dem Rotor auch Strom zugeführt werden, wenn die Mittel zur Kraftübertragung im axial innenliegenden Bereich des Rotors angeordnet sind. Außerdem steht den Bürsten im radial außenliegenden Bereich des Rotors eine vergleichsweise große Oberfläche zur Kontaktierung zur Verfügung, wodurch auch höhere Motorleistungen erzielbar sind.

Durch die in den Unteransprüchen aufgeführten Maßnahmen, sind vorteilhafte Weiterbildungen des im Hauptanspruch angegebenen Rotors möglich. Die Verwendung der Oberflächen der parallel zur Rotorachse ausgerichteten Abschnitte der Wicklungsteilstücke und/oder der Verbindungen der einzelnen Wicklungsteilstücke untereinander als Kommutator, ist besonder vorteilhaft, da sie als relativ große Kontaktfläche für die Bürsten ausgebildet werden können und da bei dieser Anordnung eine zweiseitige Lagerung des Rotors sowie zweiseitige Kraftübertragung möglich sind.
In diesem Zusammenhang erweist sich Löten zum leitenden Verbinden der einzelnen Wicklungsteilstücke als günstig, da mit dieser Technik auf einfache Weise die Oberflächenbeschaffenheit des Kommutators beeinflußbar ist.

Zur Verstärkung des magnetischen Feldes des Motors ist es vorteilhaft, zwischen den Wicklungsteilstücken ferromagnetisches Material anzuordnen.
Erfindungsgemäß wird vorgeschlagen, dazu Transformatorbleche oder Schichtungen von Transformatorblechen zu verwenden, die in Ebenen axial und radial zur Motorachse angeordnet sind.

Ein Ausführungsbeispiel der Erfindung ist in der Zeichnung dargestellt und in der nachfolgenden Beschreibung näher erläutert.
- Figur 1: zeigt die Aufsicht auf einen Rotor in Richtung der Rotorachse
und
- Figur 2: die vergrößerte Darstellung eines Ausschnitts von Figur 1.

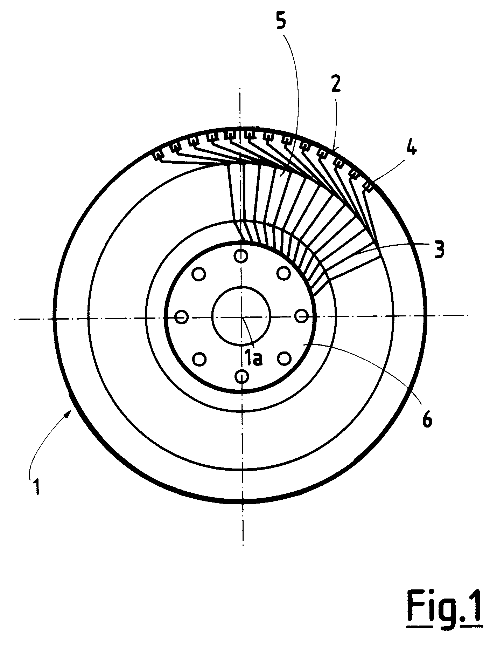

In Figur 1 ist mit 1 ein Rotor bezeichnet, mit einer Rotorachse 1a und einer stromführenden Wicklung, die sich aus einer Vielzahl von Wicklungsteilstücken 3 zusammensetzt. Die stromführende Wicklung kann beispielsweise wie in der europäischen Patentschrift 0 230 759 beschrieben, wie bei einem Wellenwickelrotor ausgeführt sein, sie kann aber auch je nach den Anforderungen, die die elektrische Maschine erfüllen muß, anders ausgestaltet sein. Wesentlich ist, daß die Wicklungsteilstücke 3 in wenigstens einer Ebene rechtwinklig zu der Rotorachse angeordnet sind und sich von einem axial innenliegenden Bereich zu einem radial außenliegenden Bereich erstrecken. Dabei sind beide Enden der Wicklungsteilstücke 3 im radial außenliegenden Bereich angeordnet. Nur über diese Enden sind leitende Verbindungen 4 der einzelnen Wicklungsteilstücke 3 untereinander hergestellt. Mit 2 ist der Kommutator des Rotors bezeichnet, der erfindungsgemäß zumindest teilweise durch die Oberflächen der Wicklungsteilstücke 3 im radial außenliegenden Bereich gebildet ist. In dem, in Figur 1 dargestellten Ausführungsbeispiel bilden die Oberflächen der parallel zur Rotorachse 1a ausgerichteten Abschnitte der Wicklungsteilstücke 3 zusammen mit den Verbindungen 4 der einzelnen Wicklungsteilstücke 3 untereinander den Kommutator 2.

Das heißt, die Bürsten zur Kontaktierung der Rotorwicklung schleifen über den äußeren Umfang des Rotors 1 parallel zur Rotorachse 1a. Die Verbindungen 4 der einzelnen Wicklungsteilstücke 3 untereinander, können vorteilhaft durch Löten oder auch eine andere geeignete Technik zum Herstellen von leitenden Verbindungen, die beispielsweise in Abhängigkeit von dem Material der Rotorwicklung gewählt wird, hergestellt werden.

Zur besseren Auflage und Führung der Bürsten auf dem Kommutator des Rotors sind die Zwischenräume zwischen den benachbarten Wicklungsabschnitten mit einem nichtleitenden Material ausgefüllt.

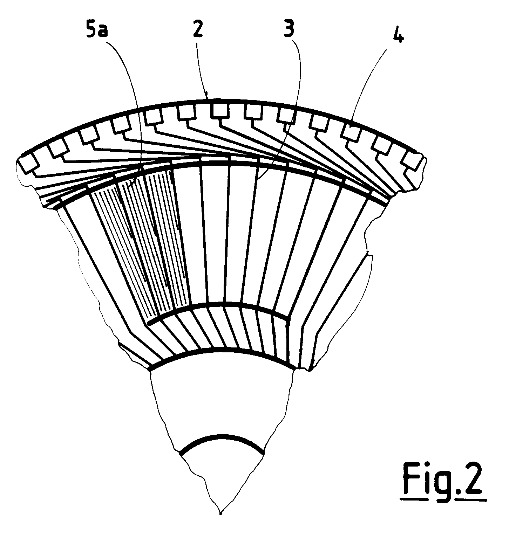

Zwischen den Wicklungsteilstücken 3 ist ein mit 5 bezeichnetes ferromagnetisches Material angeordnet, wodurch der magnetische Fluß durch die Rotorwicklung verstärkt wird. Dazu eignen sich beispielsweise Transformatorbleche 5a oder Schichtungen von Transformatorblechen 5a, die in Ebenen axial und radial zur Rotorachse 1a angeordnet sind, wie dies in Figur 2 dargestellt ist.

Durch die erfindungsgemäße Anordnung des Kommutators im radial außenliegendcn Bereich des Rotors können im axial innenliegenden Bereich Mittel zur Lagerung des Rotors und/oder zur Kraftübertragung, in Figur 1 mit 6 bezeichnet, angeordnet werden, ohne daß die Kontaktierung der Rotorwindung durch die Bürsten behindert wird. Ein weiterer wesentlicher Vorteil der Anordnung des Kommutators im radial außenliegenden Bereich besteht darin, daß hier eine relativ große Oberfläche zur Kontaktierung für die Bürsten zur Verfügung steht, wodurch die Leistungsfähigkeit der gesamten Motoranordnung erhöht werden kann.

### Bezugszeichenliste

- 1: Rotor
- 1a: Rotorachse
- 2: Kommutator
- 3: Wicklungsteilstück
- 4: Verbindung
- 5: ferromagnetisches Material
- 5a: Transformatorblech
- 6: Kraftübertragungsmittel

## Patentansprüche

1. Rotor für eine elektrische Maschine mit einem Kommutator und einer stromführenden Wicklung, die durch eine Vielzahl von am Umfang verteilten Wicklungsteilstücken gebildet ist,
wobei die Wicklungsteilstücke in wenigstens einer Ebene rechtwinklig zu der Rotorachse angeordnet sind und sich von einem axial innenliegenden Bereich zu einem radial außenliegenden Bereich erstrecken, so daß beide Enden der Wicklungssteilstücke im radial außenliegenden Bereich angeordnet sind
und nur über die beiden Enden leitende Verbindungen der einzelnen Wicklungsteilstücke untereinander gebildet sind,
dadurch gekennzeichnet,
daß der Kommutator (2) zumindest teilweise durch die Oberflächen der Wicklungsteilstücke (3) am radial außenliegenden Bereich gebildet ist.

2. Rotor nach Anspruch 1,
dadurch gekennzeichnet,
daß der Kommutator (2) durch die Oberflächen der parallel zur Rotorachse (1a) ausgerichteten Abschnitte der Wicklungsteilstücke (3) und/oder die Verbindungen (4) der einzelnen Wicklungsteilstücke (3) untereinander gebildet ist.

3. Rotor nach einem der vorhergehenden Ansprüche,
dadurch gekennzeichnet,
daß die Verbindungen (4) der einzelnen Wicklungsteilstücke (3) durch Löten gebildet sind.

4. Rotor nach einem der vorhergehenden Ansprüche,
dadurch gekennzeichnet,
daß zwischen den Wicklungsteilstücken (3) ferromagnetisches Material (5) angeordnet ist.

5. Rotor nach Anspruch 4,
dadurch gekennzeichnet,
daß das ferromagnetische Material (5) zumindest teilweise durch Transformatorbleche (5a) oder Schichtungen von Transformatorblechen (5a) gebildet ist, die in Ebenen axial und radial zur Rotorachse (1a) angeordnet sind.

6. Rotor nach einem der vorhergehenden Ansprüche,
dadurch gekennzeichnet,
daß im axial innenliegenden Bereich Mittel (6) zur Kraftübertragung angeordnet sind.
